# EUROPEAN PATENT SPECIFICATION

(11) **EP 0 982 481 B1**
(45) Date of publication and mention of the grant of the patent: **09.08.2006**
(21) Application number: 99116957.4
(22) Date of filing: 27.08.1999
(51) Int. Cl.: F02B 23/10, F02F 1/42

(54) **In-cylinder injection type of engine**
Direkteingespritzte Brennkraftmaschine
Moteur à combustion interne à injection directe

(30) Priority: 27.08.1998 JP 24159598
(43) Date of publication of application: 01.03.2000
(73) Proprietor: YAMAHA HATSUDOKI KABUSHIKI KAISHA, Iwata-shi, Shizuoka-ken 438 (JP)
(72) Inventor: Yonezawa, Minoru, c/o Yamaha Hatsudoki K. K., Iwata-shi, Shizuoka-ken, 438 (JP); Kinoshita, Yuji, c/o Yamaha Hatsudoki K. K., Iwata-shi, Shizuoka-ken, 438 (JP)
(74) Representative: Grünecker, Kinkeldey, Stockmair & Schwanhäusser Anwaltssozietät

(56) References cited:
- EP-A- 0 558 072
- DE-A- 19 644 529
- JP-A- 9 151 738
- US-A- 2 318 915
- US-A- 5 775 288

## Description

This invention relates to an in-cylinder injection type of engine according to the preamble of independent claim 1.

A conventional example of such an in-cylinder injection type of engine is disclosed in the laid-open Japanese patent application No. Hei-10-141066 published in a gazette,

The in-cylinder injection type of engine or direct injection engine disclosed in the gazette comprises intake and exhaust valves, two for each cylinder. An injector is disposed in a position between intake ports for each intake valve as seen in the cylinder axis direction and between the intake port and the bottom surface of a cylinder head as seen in the camshaft axis direction.

The central line of the injector is arranged below the passage wall surface of each suction port or intake port. The injector is arranged in a state to be nipped between intake air ports. The fuel injection direction of the injector is set to approximately the same direction as the direction of a flow of intake air in the intake air port. The shape of fuel spray injected through the injector is formed in a conical shape concentric to the central line of the injector.

The downstream end portion of the intake port where the intake valve passes through is formed in its cross section in an arcuate shape as seen in the axial direction of the camshaft. The center of the arc is located on the injector side. Part of the upstream side of the intake port between an upstream end opening formed on a side surface of the cylinder head and the curved portion of the downstream end side is formed in a straight line shape. The portion extending in a straight line passes between the seat for supporting the intake valve spring and the injector.

The above-mentioned injector is disposed to inject fuel between two openings of the intake port into the combustion chamber in the direction toward the cylinder axis, at an angle relative to the cylinder axis.

With the above-described in-cylinder injection type of engine, when the injector is attached at a large angle relative to the bottom surface of the cylinder head (the surface in contact with the cylinder block) in order to improve the injection characteristic of the injector, the intake port as seen in the axial direction of the camshaft is bent between its upstream and downstream end portions. This results in a problem of a decrease in the engine output.

The cause of the inevitable bend in the middle of the intake port is: Part of the intake - port extending in a straight line on the upstream side must be formed, between the seat of the valve spring and the injector, at a great tilt angle relative to the cylinder head bottom surface, an angle which is equal to the tilt angle of the injector. In other words, the downstream end portion curved in an arcuate shape with the center of arc located on the injector side is connected to the upstream portion tilted at a great angle relative to the cylinder head bottom surface. As a result, the intake port is bent in the connecting portion.

Furthermore, prior art documents EP-A-0 558 072 and JP 09-151738 A teach a different specific type of in-cylinder injection type of engine, wherein the intake port as well as the exhaust port are arranged on the same side of the cylinder head. In particular, in said specific type of engine, the intake port has to bridge more than half of the width of the cylinder head in order to reach the intake valve seat. Thus, the downstream end portion has to be curved back to the cylinder axis in order to meet said valve seat. However, said specific kind of engine is provided with the intake valve being arranged between the intake port and the injector, which is placed close to the bottom surface of the cylinder head.

It is an objective of the present invention to provide an in-cylinder injection type of engine as mentioned above, wherein the engine output is increased.

According to the present invention said objective is solved by an in-cylinder injection type of engine having the features of independent claim 1.

Regarding thereto, it is an advantage of the present invention to provide an in-cylinder injection type of engine in which the injector can be attached at a great angle and with which engine output is increased by reducing intake resistance.

Preferred embodiments of the present invention are laid down in the dependent claims.

Preferably, within the in-cylinder injection type of engine of the invention, the downstream end portion of the intake port is curved, as seen in the axial direction of the camshaft, along its length toward the downstream side away from the forward-end of the injector and that the center of the arcuate curve representing the cross-sectional shape of the intake port, as seen in the axial direction of the camshaft, is located on the side of a valve drive cam chamber.

The downstream end portion of the intake port as seen in the axial direction of the camshaft is curved in the opposite direction to that in conventional arrangements, so that the end portion is closer to the valve drive cam chamber along the length of the end portion toward the upstream side. As a result, the upstream portion can be connected in a straight line to the downstream portion even if the upstream portion of the intake port is formed with a great tilt angle relative to the cylinder head bottom surface.

Preferably, in the in-cylinder injection type of engine, one of two intake ports formed for each intake valve in the cylinder head is the intake port of the above-described in-cylinder injection type of engine, the two intake ports are tilted so that they are parallel to each other as seen in the axial direction of the cylinder and that their upstream ends are more displaced toward the other intake port relative to their downstream ends, and an opening-closing valve to be open while the engine is operating in a high revolution range is interposed in an intake passage connected to the upstream end of the other intake port.

Advantageously, when the engine is in the low to medium revolution range, the opening-closing valve is closed, and the intake air flows into the cylinder through only one of the intake ports with its curving direction an the downstream end side opposite to that of the conventional arrangement. The intake air flows into the cylinder so as to follow the tangent line of the cylinder bore as seen in the axial direction of the cylinder, and toward the opposite side beyond the cylinder axis as seen in the axial direction of the camshaft.

As a result, when the engine is in the low to medium revolution range, a turning flow is produced in the cylinder in the state of mixture of swirl and tumble, on the other hand, when the engine is in a high revolution range, the opening-closing valve is open and the intake air is drawn in also through the other intake port, so that a large amount of intake air can be supplied to the cylinder.

Preferably, the in-cylinder injection type of engine is provided with a swell portion formed to protrude toward the inside of the upstream part of one of the intake ports corresponding to the injector, a recess portion is formed outside the swell portion, and the injector is disposed to face the recess portion.

Advantageously, part of the other intake port corresponding to the injector need not be formed with a swell portion for avoiding interference with the injector. As a result, its inside surface may be formed with as less irregularities as practicable.

Hereinafter the present invention will be illustrated and explained in detail by means of a preferred embodiment in conjunction with the accompanying drawings. In the drawings wherein:
- FIG. 1: is a bottom view of the cylinder head of the in-cylinder injection type of engine according to a preferred embodiment as seen from the cylinder block side upward,
- FIG. 2: is a side view of the cylinder head and an intake control valve unit,
- FIG. 3: is an enlarged, partial side view of the cylinder head,
- FIG. 4: shows the cross section IV-IV of the cylinder head shown in FIG. 1,
- FIG. 5: shows the cross section V-V of the cylinder head shown in FIG. 1, and
- FIG. 6: shows the cross Section VI-VI of the cylinder head shown in FIG.

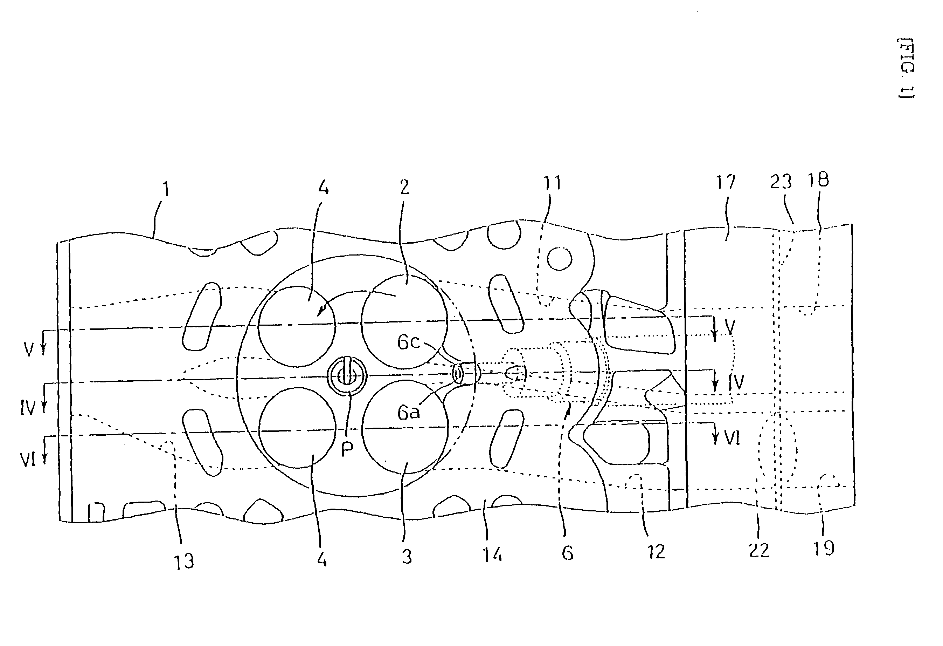

An in-cylinder injection type of engine or direct injection engine according to the preferred embodiment will be hereinafter described in reference to the appended drawings, FIGs. 1 to 6.

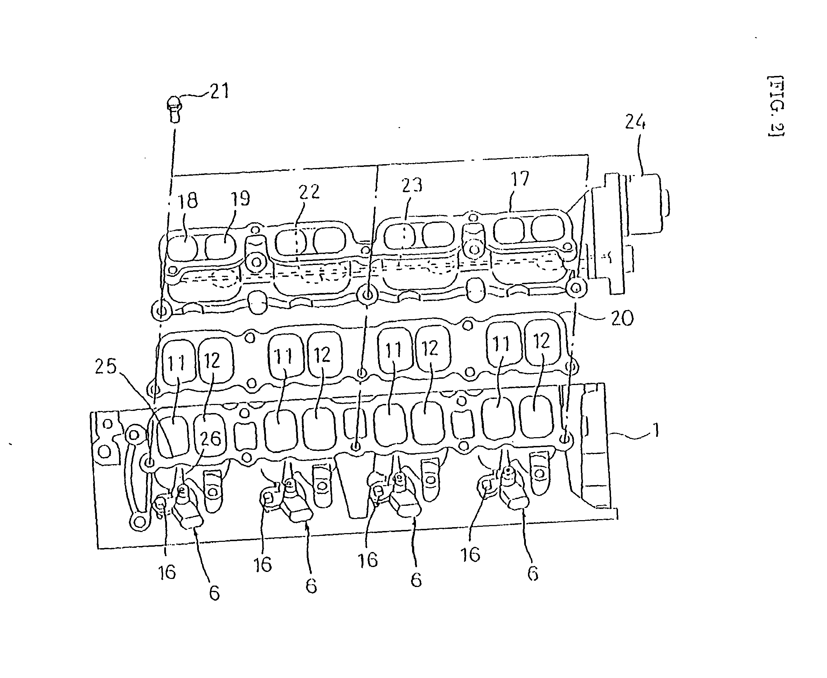

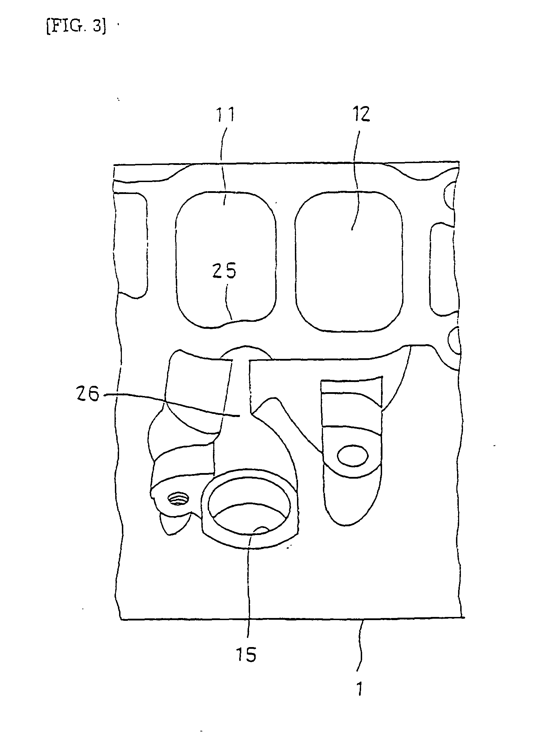

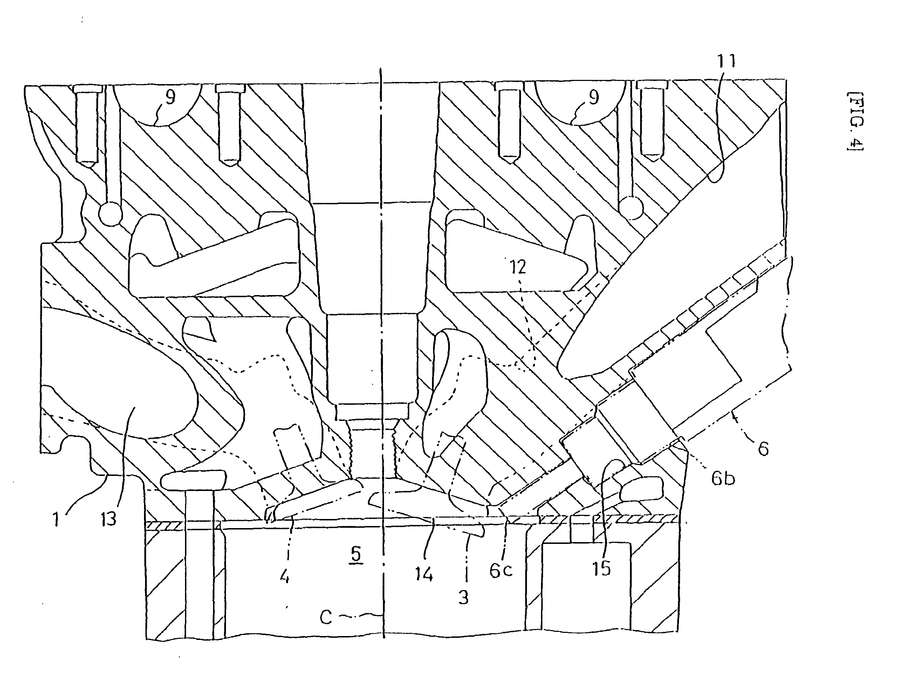

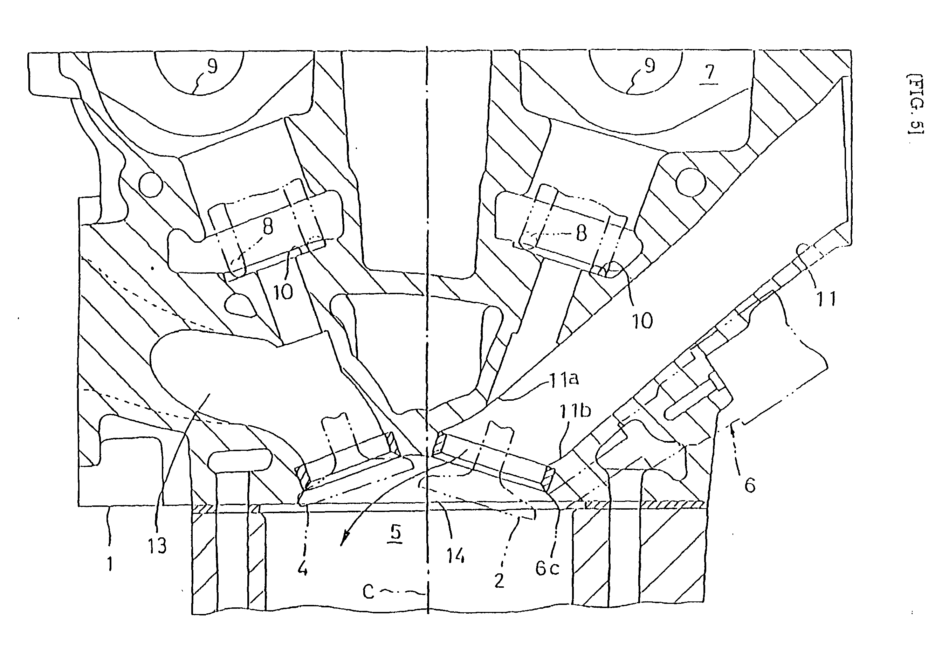

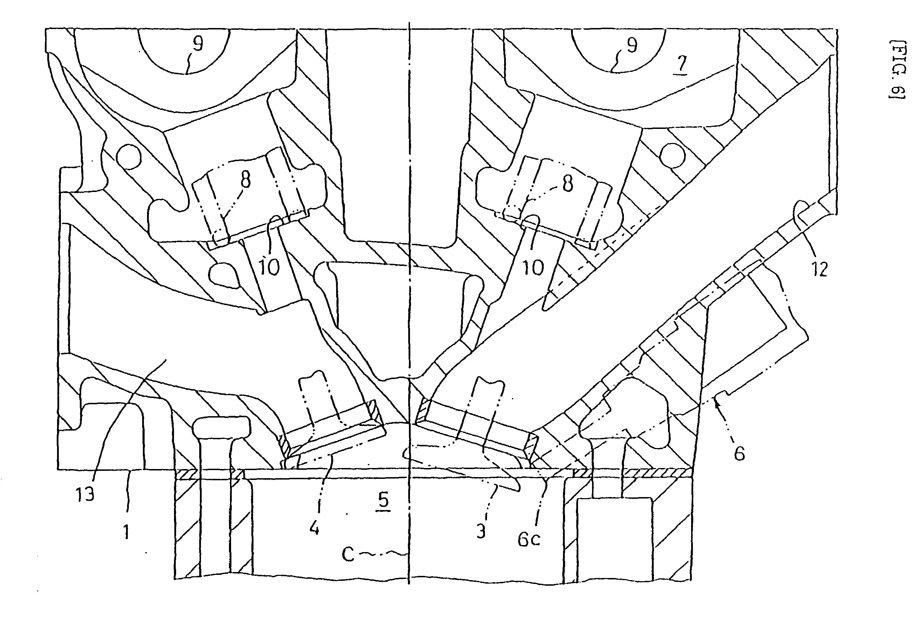

FIG. 1 is a bottom view of the cylinder head of the in-cylinder injection type of engine as seen upward from the cylinder block side, FIG. 2 is a side view of the cylinder head and an intake control valve unit, and FIG. 3 is an enlarged, partial side view of the cylinder head. FIG. 4 shows the cross section IV-IV of the cylinder head shown in FIG. 1, FIG. 5 shows the cross section V-V of the cylinder head shown in FIG. 1, and FIG. 6 shows the cross section VI-VI of the cylinder head shown in FIG. 1.

In these drawings, the reference sign 1 denotes a cylinder head of this embodiment. The cylinder head 1 is for use in an in-cylinder injection engine of a DOHC type with four cylinders, with every cylinder provided with two intake valves 2, 3 and two exhaust valves 4, 4. An injector 6 for injecting fuel directly into a combustion chamber 5 (see FIGs. 4 to 6) is attached as shown in FIG. 1 so that its fuel injection nozzle 6a is located between the two intake valves 2, 3. The cylinder head 1 is also provided with an ignition plug P in a position displaced from the cylinder axis toward the exhaust valve 4.

The intake valves 2, 3 and the exhaust valves 4 are driven with a valve driving device (not shown) disposed on the cylinder head 1. The valve driving device is of a conventionally known constitution with its components housed in a valve drive cam chamber 7 (see FIGs. 5 and 9) formed between the cylinder head 1 and a head cover (not shown). The valve spring of the valve driving device is shown with a reference sign 8, and the bearing of the camshaft with reference sign 9 in FIGs. 5 and 6. The valve spring 8 is supported on a seat 10 formed in the cylinder head 1 through a valve spring seat (not shown).

The cylinder head 1 is a formed with intake ports 11, 12 for each intake passage. The exhaust ports 13 are joined together through an exhaust passage for each cylinder in the cylinder head 1.

The injector 6 is attached to the cylinder head 1 as shown in FIG. 1 with its axial line normal to the camshaft axis direction (up-down direction in FIG. 1) as seen in the cylinder axis direction, with its forward-end directed to the cylinder axis. Also as shown in FIGs. 4 to 6, the injector 6 is attached with a tilt relative to the cylinder axis shown with a dash-and-dotted line C in the figures between the intake ports 11, 12 and the cylinder head bottom surface 14 as seen in the camshaft axis direction.

The tilt angle of the injector axis relative to the cylinder head bottom surface 14 is set greater than in conventional arrangement. A fuel injection pipe 6c of a relatively small diameter provided at the forward-end of a cylindrical valve receiving portion 6b of the injector 6 is made to face the combustion chamber 5.

The attachment of the injector 6 to the cylinder head 1 is done as follows: As shown in FIG. 4, the valve receiving portion 6b is fit into an injector attachment hole 15 bored in the side portion of the cylinder head 1, and as shown in FIG. 2, the injector 6 is secured to the cylinder head 1 using a securing bolt 16 for each cylinder.

The two intake ports 11, 12 as shown in FIG. 1 are parallel to each other as seen in the cylinder axis direction and tilted so that their upstream ends are more displaced toward one of the camshaft axis directions (downward in FIG. 1) relative to their downstream ends. Of the intake ports 11, 12, one intake port 11 located on the upper side in FIG. 1 will be hereinafter referred to as the primary port, and the other intake port as the secondary port. In other words, both of the intake ports 11, 12 are tilted as seen in the cylinder axis direction so that their upstream ends are displaced on the secondary port 12 side in the direction in which both of the intake ports 11, 12 are arranged side by side.

Both of the intake ports 11, 12 are also connected to intake passages 18, 19 of an intake control valve unit 17 shown in FIGs. 1 and 2. The intake control valve unit 17 is formed with intake passages 18, 19, eight positions in all, corresponding to the intake ports 11, 12 of the cylinder head 1. The intake control valve unit 17 is connected to a side portion of the cylinder head 1 through a gasket 20 shown in FIG. 2 and secured with securing bolts 21.

An opening-closing valve 22 comprising a butterfly valve is interposed in each of intake passages 19 connected to the secondary ports 12 at four positions in the intake control unit 17. The opening-closing valves 22 are mutually interlocked with a drive shaft 23, and connected through the drive shaft 23 to a servomotor 24 disposed on a side portion of the intake control unit 17, so that the valves 22 are closed when the engine is operated in low to medium revolution ranges, and open when the engine is in a high revolution range.

The upstream side of the intake control unit 17 is connected through an intake manifold (not shown) to a surge tank. The surge tank is provided with a throttle valve. The intake system of the engine is constituted such that external air drawn in from an air cleaner provided at the intake inlet of the surge tank is metered with the throttle valve, and led from the surge tank through the intake manifold to each intake passage of the intake control unit.

The primary port 11, one of the two intake ports 11, 12, is formed as shown in FIG. 5 with its upstream side extending in a straight line from an upstream end opening formed in the side surface of the cylinder head 1 through a region between the valve spring supporting seat 10 and the injector 6. The upstream portion formed in a straight line is approximately parallel to the axis of the injector 6 as seen in the camshaft axis direction.

The downstream end portion of the primary port 11 where the intake valve 2 passes through is curved along its length away from the fuel injection pipe 6c of the injector 6 as seen in the camshaft axis direction, with arcuate curves 11a,11b representing the cross section of the primary port 11 formed so that their centers of arcs are located on the side of the valve drive cam chamber 7.

As a result, the downstream end portion of the primary port 11 as seen in the axial direction of the camshaft is curved in the opposite direction to that in conventional arrangements, so that the end portion is closer to the valve drive cam chamber 7 along the length of the end portion toward the upstream side. As a result, the upstream portion can be connected in a straight line to the downstream portion, even if the upstream portion of the primary port 11 is formed, as seen in the camshaft axis direction, parallel to the injector 6 to avoid interference with the injector 6 attached to the cylinder head 1 with a greater attachment angle relative to the cylinder head bottom surface 14 than in conventional arrangement.

Therefore, the primary port 11 is not bent in the middle of its length even if the injector is attached at a greater angle relative to the cylinder head bottom surface 14 than in conventional arrangement. This makes it possible to improve the atomizing characteristic of the injector and to reduce intake resistance.

The upstream side of the primary port 11, as seen in the cylinder axis direction, or as shown in FIG. 1, laps over the injector 6. Therefore, the primary port 11 stands in the way of the injector 6 if the injector 6 is attached at a greater angle. To avoid such a situation, part of the upstream side of the primary port 11 corresponding to the injector 6 is provided, as shown in FIGs. 2 and 3, with a swell portion 25 protruding toward the inside of the port.

A recess portion 26 is formed in the outer side of the swell portion 25. The base portion (upper side in FIG. 2) of the injector 6 is disposed to face the recess portion 26. Incidentally, the recess portion 26 as shown in FIG. 2 is formed to extend vertically up to part of the cylinder head side wall beyond the injector 6, so that the injector 6 can be passed through that part when the injector is removed or reattached.

Forming the swell portion 25 as described above has little affect on the operation of the engine because the amount of intake air flowing through the primary port 11 is smaller than that through the secondary port 12.

The secondary port 12 is formed generally in a straight line from the upstream end opening formed in the side surface of the cylinder head 1 to the downstream end opening on the combustion chamber 5 side. Since the primary port 11 laps over the injector 6 as seen in the cylinder axis direction and since part of the secondary port 12 corresponding to the injector 6 need not be formed with a swell portion for avoiding interference with the injector 6, the inside surface of the secondary port 12 can be formed with as less irregularities as practicable. As a result, the secondary port 12 can be formed to reduce the intake resistance.

In the in-cylinder injection type of engine comprising the cylinder head 1 described above, the opening-closing valve 22 is closed when the engine is operated in the low to medium revolution range and intake air flows into the cylinder only through the primary port 11. The intake air as shown with an arrow in FIG. 1 flows into the cylinder generally to follow the tangential line of the cylinder bore as seen in the cylinder axis direction. The intake air flows as described above because the primary port 11 is tilted so that its upstream end is displaced more toward the secondary port side in comparison with its downstream end.

Also at this time, the intake air flows into the cylinder as shown with an arrow in FIG. 5 toward the opposite side beyond the cylinder axis as seen in the camshaft axis direction. The intake air flows as described above because the downstream end portion of the primary port 11 is curved in the opposite direction to that in conventional arrangements.

As a result, at low to medium revolutions, turning flow of the intake air in the cylinder occurs as a combination of swirls and tumbles. Also, since the primary port 11 is formed in a straight line from the upstream end to the downstream end without a bend in the middle, intake resistance can be reduced. In addition to that, since the attachment angle of the injector 6 relative to the cylinder head bottom surface 14 is great, injection atomization characteristic is improved.

As a result, it is possible to stabilize combustion and to increase output in the low to medium revolution range even if the air-to-fuel ratio is set to an extremely lean value.

On the other hand, when the engine is operated in the high revolution range, a large amount of intake air can be drawn into the cylinder because the opening-closing valve 22 is open and the intake air is drawn through both of the primary and secondary ports 11 and 12. As a result, it is possible to increase output at high revolutions.

Accordingly, an in-cylinder injection type of engine is provided that comprises a cylinder having a cylinder axis C, a cylinder head 1 having a bottom surface 14, a combustion chamber 5 defined by said cylinder and said cylinder head 1, at least one intake port 11, 12 having a curved downstream end portion 11 a, 11 b directed to the combustion chamber 5 of the engine, an injector 6 for injecting fuel directly into said combustion chamber 5, wherein said injector 6 is disposed between said intake port 11, 12 and the bottom surface 14 of the a cylinder head 1 and faces the combustion chamber 5 with forward end thereof, wherein said downstream end portion 11a, 11b is at least partly curved in direction to said cylinder axis C away from the forward-end of the injector 6.

The downstream end portion 11 a, 11 b of said intake port 11, 12 is arcuate curved along its length, wherein a center of the arcuate curve is located on a side of a valve drive cam chamber 7 of the cylinder head 1. The intake port 11, 12 comprises a straight line portion, wherein an axial line of the injector 6 is provided parallel with said straight line portion. The axial line of the injector 6 is inclined with and intersecting the cylinder axis C.

According to the preferred embodiment, two intake ports 11, 12 are provided in the cylinder head 1, wherein the two intake ports 11, 12 are tilted so that they are parallel to each other and upstream ends of said intake ports 11, 12 are displaced relative to their downstream ends toward one intake port side. The two intake ports comprise a primary intake port 11 and a secondary intake port 12, wherein the downstream end portion of the primary intake port 11 is completely curved in direction to said cylinder axis C away from the forward-end of the injector 6. The downstream end portion of the secondary intake port 12 is partly curved in direction to said cylinder axis C away from the forward-end of the injector 6 and partly curved away from said cylinder axis C in direction to the forward-end of the injector 6.

Moreover, according to the preferred embodiment of the in-cylinder injection type of engine, an opening-closing valve 22 is provided associated with the secondary intake port 12.

Furthermore, a swell portion 25 is formed in the primary intake port 11 on the upstream side of said intake port 11 corresponding to the injector 6 to protrude toward the inside of said intake port 11. A recess portion 26 is formed outside the swell portion 25, wherein the injector 6 is disposed to face the recess portion 26.

Said in-cylinder injection type of engine is provided with an injector for injecting fuel directly into a combustion chamber disposed between an intake port and the bottom surface of a cylinder head as seen in the camshaft axis direction. The downstream end portion of the intake port is curved along its length toward the downstream side, as seen in the camshaft axis direction, away from the forward-end of the injector and that the center of the arcuate curve representing the cross-sectional shape of the intake port, as seen in the axial direction of the camshaft, is located on the side of a valve drive cam chamber.

With the engine described above, the downstream end portion of the intake port is formed to curve to the direction opposite to that in conventional arrangements as seen in the camshaft axis direction, so that it gradually nears the valve drive cam chamber along its length toward the upstream side. As a result, the up stream portion of the intake port can be connected in a straight line to the downstream end portion even if the upstream portion is formed with a great tilt angle relative to the cylinder head bottom surface.

Therefore, the intake port is not bent in the middle of its length even if the injector is attached at a greater angle than in conventional arrangements, and it is possible to improve the atomizing characteristic of the injector, to reduce intake resistance, and to increase the engine output.

The in-cylinder injection type of engine comprises two intake ports formed for each intake valve in the cylinder head. The two intake ports are tilted so that they are parallel to each other as seen in the axial direction of the cylinder and that their upstream ends are more displaced toward the other intake port relative to their downstream ends, and an opening-closing valve to be open while the engine is operating in a high revolution range is interposed in an intake passage connected to the upstream end of the other intake port.

Accordingly, the engine is in the low to medium revolution range, the opening-closing valve is closed and the intake air flows into the cylinder through only one of the intake ports with its downstream end portion curved in the direction opposite to that in conventional arrangements. The intake air flows into the cylinder so as to follow the tangential line of the cylinder bore as seen in the cylinder axis direction and also so as to go beyond the cylinder axis to the opposite side as seen in the camshaft axis direction.

As a result, at low to medium revolutions, the turning flow of the intake air in the cylinder occurs as a combination of swirls and tumbles.

On the other hand, when the engine is operated in the high revolution range, a large amount of intake air can be drawn into the cylinder because the opening-closing valve is open and the intake air is drawn also through the other intake port.

As a result, it is possible to stabilize combustion at low to medium revolutions even if the air-to-fuel ratio is set to an extremely lean value, and to increase output at high revolutions. Namely, it is possible to reduce fuel consumption while increasing output.

The in-cylinder injection type of engine comprises a swell portion formed in part of one of the intake ports on the upstream side of the intake port corresponding to the injector to protrude toward the inside of the port, a recess portion formed outside the swell portion, and the injector disposed to face the recess portion.

Accordingly, part of the other intake port corresponding to the injector need not be formed with a swell portion for avoiding interference with the injector. As a result, its inside surface may be formed with as less irregularities as practicable.

Since the intake resistance in the other intake port is reduced as described above, the engine output is all the more increased at high revolutions.

Advantageously, an in-cylinder injection type of engine is provided with which it is possible to attach an injector at a great angle, to reduce intake resistance, and to increase engine output. Within said engine the downstream end portion of the primary port 11 is curved along its length away from the forward-end portion of the injector 6 as seen in the camshaft axis direction, with arcuate curves 11a, 11b representing the cross section of the primary port 11 formed so that their centers of arcs are located on the side of the valve drive cam chamber 7.

## Claims

1. In-cylinder injection type of engine comprising:
a cylinder having a cylinder axis (C);
a cylinder head (1) having a bottom surface (14);
a combustion chamber (5) defined by said cylinder and said cylinder head (1); at least one intake port (11,12) having a curved downstream end portion (11a, 11b) directed to the combustion chamber (5) of the engine;
at least one exhaust port (13);
an injector (6) for injecting fuel directly into said combustion chamber (5), wherein said injector (6) is disposed between said intake port (11,12) and the bottom surface (14) of the a cylinder head (1) and faces the combustion chamber (5) with forward end thereof, wherein said cylinder head has a first top side which opens to a valve drive cam chamber (7), a further second side with an opening of said exhaust port (13), and a further third side with an opening of said intake port (11,12) and an opening for said injector, said third side is opposite to said second side,
**characterized in that**
said downstream end portion (11a, 11b) is at least partly curved in direction to said cylinder axis (C) away from the forward-end of the injector (6).

2. In-cylinder injection type of engine according to claim 1, **characterized in that** the downstream end portion (11 a, 11 b) of said intake port (11, 12) is arcuate curved along its length, wherein a center of the arcuate curve is located on a side of the valve drive cam chamber (7) of the cylinder head (1).

3. In-cylinder injection type of engine according to claim 1 or 2, **characterized in that** two intake ports (11,12) are provided in the cylinder head (1), wherein the two intake ports (11, 12) are tilted so that they are parallel to each other and upstream ends of said intake ports (11, 12) are displaced relative to their downstream ends toward one intake port side.

4. In-cylinder injection type of engine according to claim 3, **characterized in that** the two intake ports comprise a primary intake port (11) and a secondary intake port (12), wherein the downstream end portion of the primary intake port (11) is completely curved in direction to said cylinder axis (C) away from the forward-end of the injector (6).

5. In-cylinder injection type of engine according to claim 4, **characterized in that** the downstream end portion of the secondary intake port (12) is partly curved in direction to said cylinder axis (C) away from the forward-end of the injector (6) and partly curved away from said cylinder axis (C) in direction to the forward-end of the injector (6).

6. In-cylinder injection type of engine according to claim 4 or 5, **characterized in that** an opening-closing valve (22) is provided associated with the secondary intake port (12).

7. In-cylinder injection type of engine according to one of the claims 4 to 6, **characterized in that** a swell portion (25) is formed in the primary intake port (11) on the upstream side of said intake port (11) corresponding to the injector (6) to protrude toward the inside of said intake port (11).

8. In-cylinder injection type of engine according to claim 7, **characterized in that** a recess portion (26) is formed outside the swell portion (25), wherein the injector (6) is disposed to face the recess portion (26).

9. In-cylinder injection type of engine according to one of the claims 1 to 8, **characterized in that** the intake port (11,12) comprises a straight line portion, wherein an axial line of the injector (6) is provided parallel with said straight line portion.

10. In-cylinder injection type of engine according to claim 9**, characterized in that** the axial line of the injector (6) is inclined with and intersecting the cylinder axis (C).

## Patentansprüche

1. Motor vom In- Zylinder- Einspritz- Typ, aufweisend:
einen Zylinder, der eine Zylinderachse (C) hat;
einen Zylinderkopf (1), der eine Unterseite (14) hat;
eine Brennkammer (5), gebildet durch den Zylinder und den Zylinderkopf (1); zumindest eine Einlassöffnung (11, 12), die einen gekrümmten stromabwärtigen Endabschnitt (11 a, 11 b) hat, der zu der Brennkammer (5) des Motors gerichtet ist; zumindest eine Auslassöffnung (13);
einen Einspritzer (6) zum Einspritzen von Kraftstoff direkt in die Brennkammer (5), wobei der Einspritzer (6) zwischen der Einlassöffnung (11, 12) und der Unterseite (14) des Zylinderkopfes (1) angeordnet ist und mit seinem vorderen Ende der Brennkammer (S) zugewandt ist, wobei der Zylinderkopf eine erste Oberseite hat, die sich zu einer Ventilantriebsnockenkammer (7) öffnet, eine weitere zweite Seite mit einer Öffnung der Auslassöffnung (13) und eine weitere dritte Seite mit einer Öffnung der Einlassöffnung (11, 12) und einer Öffnung für den Einspritzer, wobei die dritte Seite zu der zweiten Seite gegenüberliegend ist,
**dadurch gekennzeichnet, dass**
der stromabwärtige Endabschnitt (11 a, 11 b) zumindest teilweise in Richtung zu der Zylinderachse (C) weg, von dem vorderen Ende des Einspritzers (6) gekrümmt ist.

2. Motor vom In- Zylinder- Einspritz- Typ nach Anspruch 1, **dadurch gekennzeichnet, dass** der stromabwärtige Endabschnitt (11a, 11 b) der Einlassöffnung (11, 12) entlang seiner Länge bogenförmig gekrümmt ist, wobei eine Mitte der bogenförmigen Krümmung auf einer Seite der Ventilantriebs- Nockenkammer (7) des Zylinderkopfes (1) angeordnet ist.

3. Motor vom In- Zylinder- Einspritz- Typ nach Anspruch 1 oder 2, **dadurch gekennzeichnet, dass** zwei Einlassöffnungen (11, 12) in dem Zylinderkopf (1) vorgesehen sind, wobei die zwei Einlassöffnungen (11, 12) geneigt sind, so dass sie zueinander parallel sind und stromaufwärtige Enden der Einlassöffnungen (11, 12) im Verhältnis zu ihren stromabwärtigen Enden in Richtung zu einer Seite der Einlassöffnungsseite verlagert sind.

4. Motor vom In- Zylinder- Einspritz- Typ nach Anspruch 3, **dadurch gekennzeichnet, dass** die zwei Einlassöffnungen eine primäre Einlassöffnung (11) und eine sekundäre Einlassöffnung (12) aufweisen, wobei der stromabwärtige Endabschnitt der primären Einlassöffnung (11) vollständig in Richtung zu der Zylinderachse (C) weg, von dem vorderen Ende des Einspritzers (6) gekrümmt ist.

5. Motor vom In- Zylinder- Einspritz- Typ nach Anspruch 4, **dadurch gekennzeichnet, dass** der stromabwärtige Endabschnitt der sekundären Einlassöffnung (12) teilweise in Richtung zu der Zylinderachse (C) weg, von dem vorderen Ende des Einspritzers (6) teilweise weg von der Zylinderachse (C) in Richtung zu dem vorderen Ende des Einspritzers (6) gekrümmt ist.

6. Motor vom In- Zylinder- Einspritz- Typ nach Anspruch 4 oder 5, **dadurch gekennzeichnet, dass** ein Öffnungs- Schließ- Ventil (22), zugehörig der sekundären Einlassöffnung (12), vorgesehen ist.

7. Motor vom In- Zylinder- Einspritz- Typ nach einem der Ansprüche 4 bis 6, **dadurch gekennzeichnet, dass** ein Schwellabschnitt (25) in der primären Einlassöffnung (11) auf der stromaufwärtigen Seite der Einlassöffnung (11) entsprechend des Einspritzers (6) gebildet ist, um in die Richtung in das Innere der Einlassöffnung (11) vorzuspringen.

8. Motor vom In- Zylinder- Einspritz- Typ nach Anspruch 7, **dadurch gekennzeichnet, dass** ein Aussparungsabschnitt (26) außerhalb des Schwellabschnittes (25) gebildet ist, wobei der Einspritzer (6) angeordnet, dem Aussparungsabschnitt (26) zugewandt zu sein.

9. Motor vom In- Zylinder- Einspritz- Typ nach einem der Ansprüche 1 bis 8, **dadurch gekennzeichnet, dass** die Einlassöffnung (11, 12) einen geradlinigen Abschnitt aufweist, wobei eine axiale Linie des Einspritzers (6) parallel mit dem geradlinigen Abschnitt vorgesehen ist.

10. Motor vom In- Zylinder- Einspritz- Typ nach Anspruch 9, **dadurch gekennzeichnet, dass** die axiale Linie des Einspritzers (6) geneigt ist zu der und die Zylinderachse (C) schneidet.

## Revendications

1. Moteur thermique de type à injection directe, comprenant :
un cylindre, ayant un axe de cylindre (C) ;
une culasse (1), ayant une surface inférieure (14) ;
une chambre de combustion (5), définie par ledit cylindre et ladite culasse (1) ;
au moins un orifice d'admission (11, 12), ayant une partie d'extrémité aval (11a, 11b) incurvée, dirigée vers la chambre de combustion (5) du moteur thermique ;
au moins un orifice d'échappement (13) ;
un injecteur (6), pour injecter du carburant directement dans ladite chambre de combustion (5), dans lequel ledit injecteur (6) est disposé entre ledit orifice d'admission (11, 12) et la surface inférieure (14) de la culasse (1) et tourné vers la chambre de combustion (5) par son extrémité avant, dans lequel ladite culasse présente une première face supérieure, débouchant vers une chambre à came d'entraînement de soupape (7), une autre deuxième face, ayant une ouverture dudit orifice d'échappement (13), et une autre troisième face, ayant une ouverture dudit orifice d'admission (11, 12) et une ouverture pour ledit injecteur, ladite troisième face étant opposée à ladite deuxième face,
**caractérisé en ce que**
ladite partie d'extrémité aval (11a, 11b) est au moins partiellement incurvée dans la direction dudit axe de cylindre (C), à distance de l'extrémité avant de l'injecteur (6).

2. Moteur thermique de type à injection directe selon la revendication 1, **caractérisé en ce que** la partie d'extrémité aval (11a, 11b) dudit orifice d'admission (11, 12) est incurvée de façon arquée sur sa longueur, dans lequel un centre de la courbe arquée est situé sur un côté de la chambre à came d'entraînement de soupape (7) de la culasse (1).

3. Moteur thermique de type à injection directe selon la revendication 1 ou 2, **caractérisé en ce que** deux orifices d'admission (11, 12) sont prévus dans la culasse (1), dans lequel deux orifices d'admission (11, 12) sont inclinés de manière à être parallèles l'un à l'autre, et des extrémités amont desdits orifices d'admission (11, 12) sont déplacées par rapport à leurs extrémités aval, vers un côté d'orifice d'admission.

4. Moteur thermique de type à injection directe selon la revendication 3, **caractérisé en ce que** les deux orifices d'admission comprennent un orifice d'admission (11) et un orifice d'admission secondaire (12), dans lequel la partie d'extrémité aval de l'orifice d'admission principale (11) est complètement incurvée dans la direction dudit axe de cylindre (C), à l'écart de l'extrémité avant de l' injecteur (6).

5. Moteur thermique de type à injection directe selon la revendication 4, **caractérisé en ce que** la partie d'extrémité aval de l'orifice d'admission secondaire (12) est partiellement incurvée en direction dudit axe de cylindre (C), à l'écart de l'extrémité avant de l'injecteur (6), et partiellement incurvé à l'écart dudit axe de cylindre (C), en direction de l'extrémité avant d'un injecteur (6).

6. Moteur thermique de type à injection directe selon la revendication 4 ou 5, **caractérisé en ce qu'**une soupape d'ouverture-fermeture (22) est prévue, associée à l'orifice d'admission secondaire (12).

7. Moteur thermique de type à injection directe selon l'une des revendications 4 à 6, **caractérisé en ce qu'**une partie à renflement (25) est formée dans l'orifice d'admission primaire (11), sur le côté amont dudit orifice d'admission (11) correspondant à l'injecteur (6) pour faire saillie vers l'intérieur dudit orifice d'admission (11).

8. Moteur thermique de type à injection directe selon la revendication 7, **caractérisé en ce qu'**une partie creusée (26) est formée à l'extérieur de la partie à renflement (25), dans lequel l'injecteur (6) est disposé pour être tourné pour être face à la partie de cavité (26).

9. Moteur thermique de type à injection directe selon l'une des revendications 1 à 8, **caractérisé en ce que** l'orifice d'admission (11, 12) comprend une partie en ligne droite, dans laquelle une ligne axiale de l'injecteur (6) est parallèle à ladite partie en ligne droite.

10. Moteur thermique de type à injection directe selon la revendication 9, **caractérisé en ce que** la ligne axiale de l'injecteur (6) est inclinée par rapport à, et coupe l'axe de cylindre (C).
